# EUROPEAN PATENT APPLICATION

(11) **EP 3 712 402 A1**
(43) Date of publication of application: **23.09.2020**
(21) Application number: 18879619.7
(22) Date of filing: 03.10.2018
(51) Int. Cl.: F02C 7/047

(54) **METHOD OF CONTROLLING A DEICING SYSTEM ON THE AIR INTAKE OF AN AIRCRAFT GAS TURBINE ENGINE**

(30) Priority: 14.11.2017 RU 2017139379
(71) Applicant: Joint-Stock Company "United Engine Corporation" (JSC "EUC"), Moscow 105118 (RU)
(72) Inventor: SAZHENKOV, Aleksej Nikolaevich, g. Perm' 614007 (RU); SAVENKOV, Yurij Semenovich, g. Perm' 614068 (RU)
(74) Representative: De Lorenzo, Danilo
(86) International application number: PCT/RU2018/000642
(87) International publication number: WO 2019/098881

(57) **Abstract**

This invention is related to the control methods of the aviation gas turbine engines, particularly, to the control methods of the anti-icing system of the inlet device (air intake) of the aviation gas turbine engine.

Method for the control of the anti-icing system of the aircraft gas turbine engine air intake including the record of the aircraft icing, icing data transmission from the aircraft system to the electronic controller of the gas turbine engine installed at the housing, generation of the heating air offtake from the gas turbine engine compressor, electronic controller's supply of the control signal for the opening of the slide valve ensuring supply of the heating air from the compressor to the gas turbine engine air intake if the data of the aircraft icing are available. In this method, additionally, the serviceability of the data transmission from the airplane system to the electronic engine controller is monitored, the temperature at the engine inlet T_{engine inlet} is measured using the transducer located at the air intake of the gas turbine engine, the measure air temperature at the engine inlet T_{engine inlet} is compared with the preset limiting value T_{limiting value} and in case of simultaneous detection of the data transmission from the airplane system and the current T_{engine inlet} smaller than T_{limiting value}, - heating air is supplied from the compressor to the gas turbine engine air intake. Besides, additionally, in this method, the preset limiting value T_{limiting value} is equal to 10°C. Besides, additionally, the engine inlet air temperature T_{engine inlet}, comparison of the measured engine inlet air temperature with the preset limiting value T_{limiting value}, the serviceability of the system for the data transmission from the airplane system is monitored in the engine electronic controller. Besides, the data from the airplane system to the electronic controller is transmitted via the code communication lines as per the bipolar sequential code interface.
Therefore, the implementation of the proposed invention with the characteristic features above, in conjunction with the known features of the claimed invention, improves the operation reliability of the gas turbine engine in icing conditions in cases of the failures of the aircraft and engine icing data transmission systems at the expense of the engine inlet air temperature measurement in the engine electronic controller.

## Description

This invention is related to the control methods of the aviation gas turbine engines, particularly, to the control methods of the anti-icing system of the inlet device (air intake) of the aviation gas turbine engine.

In case of the airplane flight in the atmosphere layers with low temperature and excessive humidity ice formation on the surfaces of the airplane and its power unit is possible. The ice deposits not only increases the weight but also substantially compromises the airplane aerodynamics. Besides, the icing of the inlet device and/or compressor of the aviation gas turbine engine and may cause the efficiency reduction and compressor operation stability margin, and in case of the ice breaking - to the failure of its blades. Therefore, present-day airplanes and aviation gas turbine engines make a wide use of thermal anti-icing systems.

A method of control of the electrical anti-icing system removing the ice off the air intake of the turbine jet engine nacelle (Patent RU 250171, IPC B64D 15/12, published on December 20, 2013). The essence of the method taken as the analog consists in the obtaining of the data of the outer flight conditions from the airplane central control unit, generation of the thermal control model corresponding to the flight conditions obtained and supply of the required electrical power to the resistor heating elements based on the selected thermal control model.

Disadvantages of the prototype are complexity of the electrical heater system and high maintenance labor hours, including, during the troubleshooting of the resistor elements and electrical communication lines. Besides, the anti-icing system operation efficiency based on the adopted thermal model supposes its high reliability and robustness which not always may be provided in case of failures of the transducers of the outer flight condition parameters or potential failures of the data transmission system from the airplane central control unit.

A method of the control of the anti-icing system of the air intake of the airplane gas turbine engine is known (Patent EP 3034813, IPC F01D21/00, F02C7/047 published on June 22, 2016) used as the prototype.

In the method mentioned the airplane icing is registered, data transmission of the airplane icing from the airplane system to the electronic controller of the gas turbine engine and electronic controller's supply of the control signal for the opening of the slide valve ensuring heating air supply from the compressor to the air intake of the gas turbine engine depending on the data of numerous temperature transducers.

A disadvantage of the known method is its complexity, excessive cost and operation expenses related to the presence of numerous additional temperature transducers for the monitoring of the air intake thermal status.

The technical problem of the invention claimed is the reliability improvement of the gas turbine engine in icing conditions in case of the airplane icing data transmission failure.

The technical result is attained by the fact that in the control method of the anti-icing system of the airplane gas turbine engine air intake including the airplane icing record, icing data transmission from the airplane system to the electronic controller of the gas turbine engine located on its housing, formation of the heating air offtake from the gas turbine engine compressor, electronic controller's supply of the control signal for the opening of the slide valve ensuring the supply of the heating air from the compressor to the air intake of the gas turbine engine in case of availability of the airplane icing data, *as per the invention,* additionally, the serviceability of the data transmission from the airplane system to the electronic engine controller is monitored, the temperature at the engine inlet T_{engine inlet} is measured using the transducer located at the air intake of the gas turbine engine, the measure air temperature at the engine inlet T_{engine inlet} is compared with the preset limiting value T_{limiting value} and in case of simultaneous detection of the data transmission from the airplane system and the current T_{engine inlet} smaller than T_{limiting value}, - heating air is supplied from the compressor to the gas turbine engine air intake.

Besides, *as per the invention,* the preset limiting value T_{limiting value} is equal to 10 °C.

Besides, *as per the invention,* the air temperature measurement at the engine inlet T_{engine inlet}, the comparison of the measured air temperature at the engine inlet T_{engine inlet} with the preset limiting value T_{limiting value}, the serviceability of the data transmission system from the airplane system is monitored in the engine electronic controller.

Besides, *as per the invention,* the data from the airplane system to the electronic controller is transmitted via the code communication lines as per the bipolar sequential code interface.

In the invention proposed, as opposed to the prototype, the serviceability of the data transmission from the airplane system to the engine electronic controller is monitored, the engine inlet air temperature T_{engine inlet} is measured using the transducer located at the air intake of the gas turbine engine, the measured engine inlet air temperature T_{engine inlet} is compared with the preset limiting value Tπp and in case of simultaneous detection of the data transmission from the airplane system and the current T_{engine inlet} smaller than T_{limiting value}, - heating air is supplied from the compressor to the gas turbine engine air intake which enables the operation of the engine anti-icing system in case of failures of the airplane systems of the data transmission of the airplane and engine icing due to the measurement of the engine inlet air temperature in the engine electronic controller.

Besides, as opposed to the prototype, the preset limiting value T_{limiting value} is equal to 10 °C which enables potential elimination of the possible icing of the compressor blades and nacelle.

Besides, as opposed to the prototype, the engine inlet air temperature T_{engine inlet}, comparison of the measured engine inlet air temperature with the preset limiting value T_{limiting value}, the serviceability of the system for the data transmission from the airplane system is monitored in the engine electronic controller which, in case of the failure of the code communication lines enables diagnosis of the possible engine icing using standard means included in the automatic control system, without using additional measurement systems and transducers.

Besides, unlike the prototype, the data from the airplane system to the electronic controller are transmitted via the code communication lines as per the bipolar sequential code interface.

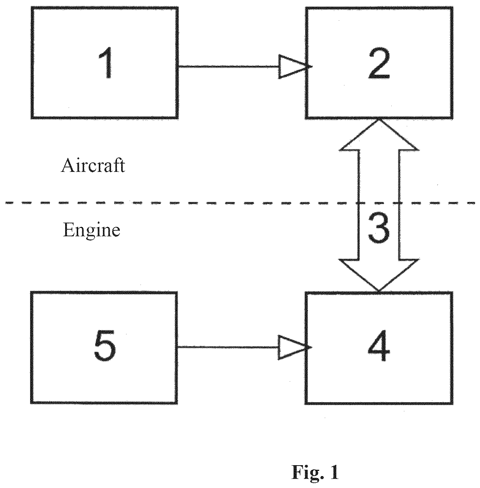

The drawing shows the structural schematic diagram of the device implementing the method claimed.

Unit 1 detects (diagnoses) the airplane icing and the output signal of the icing presence from the Unit 1 output is supplied to Unit 2 input.

Various icing indicators, for example, mechanical indicators based on the measurement of the sensor resonant frequency changing during its icing; or electrical thermal, ultrasonic, capacitor, optical etc. may be used as the icing detection unit.

Unit 2 is the general aircraft equipment control system (GAECS) ensuring control, alarms and monitoring of the engineering status of the aircraft systems, including icing information reception and transmission of the icing data to the engine electronic controller - Unit 4.

In general, the GAECS is designed for the control and monitoring (flight and ground) of the engineering status of the general aircraft equipment, supply of the interfaced equipment and crew members with the required information of the aircraft systems' status: hydraulic system, oxygen system, landing gear extension and retraction, fuel system, propulsion power unit, auxiliary power unit, wing anti-icing system, fire protection system etc.

Element 3 is electrical communication lines ensuring icing data transmission from Unit 2 to the input of Unit 4. The data is transmitted as the bipolar sequential code.

Unit 4 is the engine electronic controller, for example, FADEC type, which is a special-purpose electronic digital computer ensuring control of all the operation modes of the gas turbine engine.

Alongside with other functions, the engine electronic controller also measures the engine inlet air temperature T_{engine inlet} using Unit 5, the measured engine inlet temperature is compared with the preset limiting value T_{limiting value}, icing data transmission serviceability is monitored and in case of simultaneous detection of the data transmission from the aircraft system and with the current value of T_{engine inlet} smaller than T_{limiting value}, the relevant control signal is generated to the heating air supply from the compressor.

Unit 5 is the engine inlet air temperature transducer. The transducer is located in the air channel of the engine air intake and is a component part of the standard set of primary information transducers interfacing the engine electronic controller (Unit 4).

The device operates as follows.

In case of the aircraft flight in icing conditions the relevant icing signal is generated at the Unit 1 output which is supplied to the inlet of the aircraft equipment control system - Unit 2 input. As a result, icing information is supplied to the input of the engine electronic controller via the code communication lines as the bipolar sequential code interface.

In case of the icing signal arrival the engine electronic controller automatically generates the control signal ensuring (actuating) the supply of the heating air from the compressor to the gas turbine engine air intake via the pipelines. The heating effect results in the de-icing.

In case of the icing data transmission failure, for example, due to the communication lines 3 breaking, the electronic controller promptly detects this failure and measures the engine air inlet temperature T_{engine inlet}, compares the measured engine air inlet temperature T_{engine inlet} with the preset limiting value T_{limiting value}, and in case of simultaneous detection of the data transmission from the airplane system and the current T_{engine inlet} smaller than T_{liliting value}, - heating air is supplied from the compressor to the gas turbine engine air intake. Thus the reliable operation of the gas turbine in icing conditions in case of failure of the aircraft systems for the icing data transmission is ensured.

As applicable to the prospective gas turbine engine, the field test-bench tests have fully confirmed the functional serviceability of the method claimed.

The method for the implementation of the claimed method is the electronic controller of the prospective engine which is a special purpose real-time digital computer equipped with interfaces, detectors, actuators and engine and aircraft systems. The electronic engine controller ensures reception of the coded information from the aircraft systems at the rate of 100 kBaud in 64-word parcels of 32-bit words.

The electronic controller of the prospective engine also provides the possibility of the manual forced actuation of the air intake anti-icing system upon the command from the cockpit.

The engine inlet air temperature was measured using a thermal resistor transducer the operation principle of which is based on the metals' property of changing their ohmic resistance depending on the ambient air temperature. But in general a transducer with a different operation principle may be used.

The air for the intake heating was taken from the intermediate stage of the prospective engine high pressure compressor.

The device simulating the GAECS operation was service test-bench equipment.

Therefore, the implementation of the proposed invention with the characteristic features above, in conjunction with the known features of the claimed invention, improves the operation reliability of the gas turbine engine in icing conditions in cases of the failures of the aircraft and engine icing data transmission systems at the expense of the engine inlet air temperature measurement in the engine electronic controller.

## Claims

1. Method for the control of the anti-icing system of the aircraft gas turbine engine air intake including the record of the aircraft icing, icing data transmission from the aircraft system to the electronic controller of the gas turbine engine installed at the housing, generation of the heating air offtake from the gas turbine engine compressor, electronic controller's supply of the control signal for the opening of the slide valve ensuring supply of the heating air from the compressor to the gas turbine engine air intake if the data of the aircraft icing are available **characterized in** the fact that the serviceability of the data transmission from the aircraft system to the engine electronic controller is additionally monitored, engine air inlet temperature T_{engine inlet} is measured using the transducer installed at the gas turbine engine air intake, the measured engine inlet air temperature T_{engine inlet} is compared with the preset limiting value T_{limiting value}, and in case of simultaneous detection of the data transmission failure from the airplane system and the current T_{engine inlet} smaller than T_{limiting value}, - heating air is supplied from the compressor to the gas turbine engine air intake.

2. Method for the control of the anti-icing system of the aircraft gas turbine engine air intake as per Claim 1 **characterized in** the fact that the preset limiting value T_{limiting value} is equal to 10 °C.

3. Method for the control of the anti-icing system of the aircraft gas turbine engine air intake as per Claim 1 **characterized in** the fact that the engine inlet temperature T_{engine inlet} measurement, comparison of the measured air temperature with the preset limiting value T_{limiting value}, monitoring of the data transmission from the aircraft system is performed in the engine electronic controller.

4. Method for the control of the anti-icing system of the aircraft gas turbine engine air intake as per Claim 3 **characterized in** the fact that the data from the aircraft system to the electronic controller are transmitted via the code communication lines as per the bipolar sequential code interface.
